# EUROPEAN PATENT APPLICATION

(11) **EP 1 564 667 A1**
(43) Date of publication of application: **17.08.2005**
(21) Application number: 04394007.1
(22) Date of filing: 13.02.2004
(51) Int. Cl.: G06F 17/60

(54) **A system and method for the validation of electronic vouchers**

(71) Applicant: Idiom Holdings Limited, Sandymount, Dublin 4 (IE)
(72) Inventor: Hession, Eamon, Rathmines Dublin 6 (IE)
(74) Representative: Moore, Barry

(57) **Abstract**

The invention relates to a validation system and method adapted to enable a validation of electronic vouchers. A validation server is provided on which is maintained a data correlation between a user identifier specific (UID) to an individual user and a voucher identifier (VID) specific to a specific electronic voucher. A delivery identifier (DID) specific to a device associated with that user may also be provided. A valid voucher is defined by a combination of the VID with at least one of the UID and/or DID. A copy of the voucher identifier is provided to the user. In order to validate a voucher, the user provides a combination of their user identifier/delivery identifier and the voucher identifier to a remote terminal, adapted to be in communication with the validation server. The remote terminal requests validation from the server and if the presented combination match the previously stored combination a match is determined and the voucher is validated.

## Description

### Field of the Invention

The present invention relates to the validation of vouchers and in particular to a system and method adapted to validate an electronic vouchers. More particularly, the invention relates to a method and system that utilises data messages within mobile telecommunication networks to validate electronic vouchers.

### Background Of The Invention

The use of vouchers is well known within commercial environments. Traditionally a voucher is provided by one or more promoters in the form of a paper coupon which can be subsequently redeemed by a user for specific goods or services. Examples of vouchers include promotional discounts on specific products, monetary tokens, tickets and the like.

The emergence of new retail channels such as mobile phone-based "mCommerce" and Internet-based "eCommerce" have brought to the forefront issues surrounding the delivery of commodities purchased through these channels via electronic and/or mobile devices. Consumer demand generated by the convenience of these new channels has enabled a wide variety of consumer goods that can be purchased using mobile devices; however, scarce few of the commodities purchased through these channels can actually be delivered via the same channel. Instead, these goods are typically shipped via post or other delivery means to the consumer, but this creates an additional cost of goods to both the consumer and retailer

A preferred, cost-savings method is for the purchasing consumer to be presented with a voucher, which can be exchanged for the commodity at a designated location. Again, this voucher could be delivered to the consumer via post to the consumer, but the most efficient and cost-effective way is to deliver the voucher via the same electronic channel as the purchase was made, ie, back to the mobile device. To date, however, electronic vouchering systems and methods have been found to have several shortcomings.

Historically, vouchers have been used for decades as a means to "bridge the gap" when there is a lag between the payment for and actually delivery of an commodity. Examples of "vouchers" include tickets, gift certificates and money-off coupons. Traditionally, these vouchers have been paper-based, with special features such as serial numbers, bar-codes, magnetic stripes and holograms which are used to limit risk of fraudulent activities such as misuse and counterfeiting. Such features, however, cannot be easily replicated through mCommerce and eCommerce channels. Many current electronic vouchers have been limited to simple text. MCommerce and eCommerce retailers have struggled to create a process where vouchers can be issued electronically to their channel customers and later exchanged for a commodity at a traditional retail store without compromising the validation process of the voucher at the point of exchange.
- The complexity of the required validation process varies based on the requirements of the voucher issuer; however, the core requirements of a voucher validation process, be it paper-based or electronic, can be summarized to be The Voucher is used in the manner intended by the issuer; i.e., in a specified retail outlet(s), in exchange for a specified product(s), prior to a specified expiration date, valid for a limited number of transactions, typically once-only. The voucher can also be used as a means to receive a discount on a specified product.
- The Voucher has unique qualities, to ensure that only the original and not a counterfeit copy is redeemed.

Previous attempts to create an "Voucher" (one that can be sent via the mCommerce or eCommerce channels and redeemed through either of these channels as well as "traditional" retail stores) have failed to be successful for a variety of reasons. These include:
- The Voucher was in a format that was easily copied, ie, a coupon printed from a home computer
- The Voucher could be validated, but the process was inefficient and time-consuming for the retailer, i.e., the store clerk had to check a list of "valid voucher codes" and/or call a central help desk to confirm the vouchers' validity.
- Furthermore if multiple vouchers are associated with a specific user it is often difficult to ascertain which is the correct voucher for redemption, ie it is difficult to associate multiple offers to be redeemed by a single user.
- Little or no restriction can be placed on who can use a voucher

The market place demand, therefore, has created the need for an electronic voucher validation process that can pass the core requirements tests as stated above. There is therefore a need to provide a system and process that creates a unique and verifiable link between an electronic voucher, the point of redemption and a validation-requirements rule set.

There is therefore a technical requirement to provide a system and method that can provide for an electronic voucher validation process that can pass the requirements tests as stated above whilst by-passing the constraint that these vouchers can only exist in a closed-loop environment.

### Summary Of The Invention

Accordingly the present invention provides a system and method adapted to enable the validation of electronic vouchers.

In accordance with a first embodiment of the invention a validation system adapted to provide for validation of electronic vouchers is provided, the system including:
a validation server adapted to initially define a valid voucher by associating a voucher identifier (VID) with one or more identifiers specific to a user so as to define a valid voucher/user identifier combination for that voucher,
a first data communication means adapted to enable a subsequent communication of the voucher identifier in the form of a mobile data communication packet from the server to a mobile device associated with the user,
a second data communication means adapted to enable data communication between the server and a remote terminal, such that an electronic voucher/user identifier combination presented at the remote terminal may be communicated to the validation server for validation,
and wherein the validation server includes comparison means adapted to compare the voucher identifier/user identifier combination received from the remote terminal with the defined valid combination to determined validity of the received voucher such that on determination of a valid voucher/user identifier combination a data communication is transmitted via the second communication means to the remote terminal confirming that the presented electronic voucher is a valid voucher.

Desirably the system and method of the present invention utilise a plurality of identifiers including a voucher identifier ("VID"), a user identifier ("UID"), a delivery identifier ("DID") and a point of redemption identifier ("PID"). By effecting a comparison of a presented set of selected ones of these plurality of identifiers at a central server, the system of the present invention is adapted to enable a user to redeem an electronic voucher for one or more of a commodity, discount, points, promotion or cash. In specific embodiments the validation of the voucher is effected by conducting a comparison of a combination of a UID and associated VID to trigger a voucher validation process between a PID and the validation server. In other embodiments, the validation of the voucher is effected by conducting a comparison of a combination of a DID and associated VID to trigger a voucher validation process between a PID and the validation server.. In specific embodiments, the VID is specific to a registered UID and said VID is linked to a UID in the form of a data message to that recipient's unique DID address. Validation requires the recipient to provide both their UID and VID at a designated PID redemption point, where these data elements are applied electronically against a rule set and data store at the validation server to confirm or deny electronic voucher validity.

The user ID (UID) is desirably a unique number or indicia that identifies a specific user within the system of the present invention. Desirably, the validation server is adapted to further associate one or more delivery identifiers (DIDs) with the user ID, Each of the DID's are desirably unique identifiers specific to a user's contact device such as a phone number, SIM card ID, email address, a Mobile Device ID. The unique user ID (UID) can have multiple Delivery IDs (DIDs) associated with it. It will be appreciated that a voucher identifier code does not have to be unique but that the combination of Voucher ID with the User or Delivery ID is a unique combination. Furthermore if the system of the present invention is utilised with or interfaced with other databases of users it is possible that a specific user may have other UID's specific to those databases. It is possible therefore for the validation server to associate two or more UID's for a specific user, each of the UID's being related to different third party service providers.

A valid voucher is defined by the unique combination of the voucher identifier and at least one of the user identifier and/or delivery identifier. As such it will be appreciated that the present invention provides a voucher having at least two specific components. The voucher ID (VID) is desirably an electronic code or indicia that is suitable for transmission in a mobile data message. It will be appreciated that a voucher identifier can be provided in any suitable electronically transmittable format such as for example a sequence of numbers or letters or a barcode.

Desirably, the Point Of Redemption ID (PID) is a unique identifier that is associated with a specific terminal and is also stored at the validation server. The validation server may be further adapted to selectively validate voucher transaction requests on comparison of the PID associated with the transaction with authorised PID's. Examples of suitable PIDs are: a POS terminal identifier, a web site , a phone number, shortcode etc.

Typically, in order to register with the system of the present invention, a user initially transmits an activation code, usually the user identifier (UID), in the form of a data message from the mobile device of the user to the validation server using the first communication channel. On receipt at the validation server, the UID is associated with the mobile delivery identifier (DID) in order to create an associated UID/DID combination. For a voucher to be validated it is necessary for a valid combination of a voucher identifier with at least one of the user identifier and/or delivery identifier to have been defined at the validation server. Once such a valid combination has been defined it is then possible for a user to validate a voucher using the system and method of the present invention. It is possible using the voucher validation system of the present invention to provide, amongst other items, an electronic loyalty schema. As a user shops he may get rewarded for his loyalty to a single branch or brand by being awarded vouchers. Upon successful purchase at a merchant store/Website, the user's account may be updated with Voucher "points" by the user having his card swiped at a merchant store, or by entering his account number on a merchant checkout webpage etc. The swiping of the card associates the UID with the points accrued, and this combination is stored at a loyalty server, typically separate and remote from the validity server. The user may also buy voucher "points". It will be appreciated that the accrual of points or purchasing behaviour is not controlled or monitored by the validation server, but by the loyalty server, typically controlled by a Voucher Sponsor Company running the loyalty scheme.

Once the user reaches a pre-determined number of points it is possible for the user to redeem a voucher, the redemption of which requires the initial issuance of a VID specific to that voucher.

Once a specific transaction has been associated with a voucher, the VID specific to that voucher is associated at the validity server with the UID of the user for whom the voucher is associated. The validity server additionally stores an associated DID with the UID, and the validity server issues the VID through the first communication means to the associated mobile device of the DID. A valid voucher is thereby defined by the stored combination at the validation server of the voucher identifier with one or more of the user identifier or delivery identifier.

The user makes a claim for redemption of a voucher by supplying his Voucher Code (VID) with one of the user identifier or delivery identifier at a pre specified Point of Redemption (PID). The Point of Redemption (PID) sends a validation request to the validation server through the second communication means and receives a positive or negative acknowledgement response from the validation server. The validation server, on receipt of such a request, checks to see if the unique combination of presented identifiers exists in its database; if it does, then the request is validated and a positive acknowledgement returned. Upon receiving a positive response, the user may receive the claimed reward specific to the voucher. The valid voucher defined by the combination of identifiers may typically have some associated security features such as an expiry time period within which the voucher is defined as valid. The validation server may also associate a valid voucher with specific Points Of Redemption (PIDs) location where the voucher may be redeemed.

### Brief Description Of The Drawings

The present invention will now be described with reference to the accompanying drawings in which:
Figure 1 is a schematic illustration of an example of a network system according to the present invention.
Figure 2 is an example of a card associated with a user for use with the methodology of the present invention.
Figure 3 is a flow chart showing an exemplary mode of registration by a user with the system of the present invention.
Figure 4 is a flow chart sequence as conducted by the server for the interaction with the user during the registration process of Figure 3.
Figure 5 is an exemplary flow sequence showing the use of the card of Figure 2 in the provision of a loyalty system in accordance with the present invention.
Figure 6 is an equivalent flow sequence for that of Figure 5, as observed at the server.
Figure 7 is an exemplary flow sequence indicating how a user of the system of the present invention may redeem one or more offers.

### Detailed Description Of The Drawings

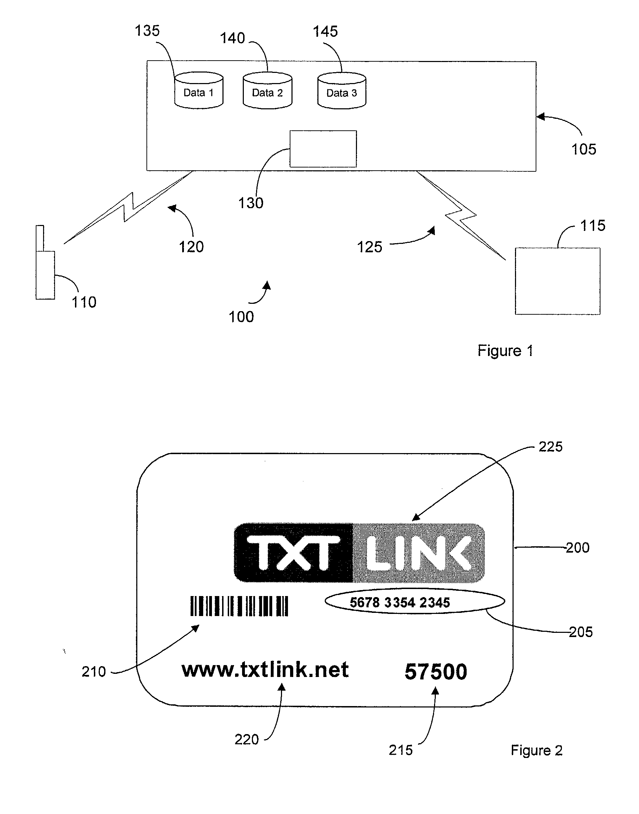

The present invention will now be described with reference to Figures 1 to 7.

The present invention provides validation system and method adapted to enable a validation of one or more electronic vouchers. The system enables the provision of such validation by defining a valid voucher as a unique combination of a voucher identifier with one or more of a user identifier or a delivery identifier. On subsequent submission of request for voucher validation, the submitted combination are compared with the previously defined combination and if a match is effected the presented voucher is determined as a valid voucher.

As shown in Figure 1, the present invention provides a network architecture 100 including a server 105 adapted to enable communication between a wireless device 110 of a user, and a remote terminal 115. The wireless device is preferably a wireless telecommunication device such as a mobile telephone incorporating a SIM card and the remote terminal is desirably of the type commonly known to authorise and verify credit or debit card transactions. It will be appreciated that these are illustrative examples of the type of wireless device and remote terminal and it is not intended to limit the present invention to such specifics. Each of the wireless device 110 and the remote terminal are adapted to effect communication with the server 105 via a communication protocol 120, 125.

Typically, the communication protocol 120 utilised by the wireless device 120 is a wireless telecommunication protocol such as a GSM network or the like and is desirably adapted to enable the communication between the wireless device and the server using data messaging such as SMS or MMS messages. Therefore, it will be appreciated that although the protocol 120 is indicated as two-way traffic directly between the server and the wireless device that such communication may be via standard mobile networks such as Short Message Switching Centres (SMSC's) or the like. The communication protocol 125 utilised between the remote terminal 115 and the server 105 is again typically a telecommunication protocol although it is not necessarily provided by a wireless network. For example it is known in the art for point of sale terminals to communicate with remote servers via a standard wired telephone communication connection.

The server is provided with a communication protocol interface 130. This interface is shown for the sake of convenience as a single integer within the schematic of Figure 1, and is adapted to enable communication between each of the wireless device and server and the remote terminal and the server, thereby providing first and second communication means. It will therefore be appreciated that these communication means may be provided as one or more distinct components, such as for example a GSM interface in the case of the wireless device and a modem in the case of the remote terminal.

The validation server is additionally provided with one or more data stores 135, 140, 145. In the schematic of Figure 1, three data stores are provided as distinct integers. Such distinction between the functionality of the three is for convenience purposes only as it will be appreciated that a data structure may be easily sub-divided in the form of a relational database or the like to provide distinct storage areas within a single data structure. In the case of the present invention, desirably three distinct types of identifiers are stored at the central identifiers, and as such three separate data structures are shown in Figure 1. A registered user of the system of the present invention is associated with two identifiers types, which are typically:
1) A unique identifier associated with their mobile device such as the device MSISDN number or the like, the delivery identifier (DID). It will be appreciated that a specific user may be provided with two or more DID's as that user may have more than one wireless communication device associated with them.
2) A unique assigned identifier associated with that user, the user identifier (UID).

The third data store is adapted to store one or more voucher identifiers VIDs. The voucher identifier is used in combination with one or more of the UID and DID to define a valid voucher. A voucher identifier is defined for a specific voucher and can therefore be considered as being temporary in nature. Once the voucher has been redeemed the voucher identifier is redundant, However the UID and DID are of a greater longevity as they are specific to a user of the system.

It will be appreciated that the system of the present invention utilises a first identifier (DID) which is assigned to the wireless device and is typically assigned by a network operator and a second personal identifier (UID) which is specific to a user of the system. Either of the UID or DID may then be used with subsequently issued VID, typically in the form of temporary PIN numbers or indicia, to define a valid voucher at the validation server. This valid combination may then be subsequently used to ensure that a user presenting a voucher is presenting a valid voucher. The second identifier, the UID is typically provided to the user as a sequence of numbers or indicia and may be stored on an issued card for the personal use of the registered user. It is also possible for the system to incorporate previously issued card identifiers specific to that user, for example loyalty cards, bank cards or the like, and to use those card identifiers as the UID of that user. Alternatively the system may be adapted to associate two or more UID's with a specific user, at least one of the UID's being associated with a specific third party service provider. As such the system may be used to share vouchers between different service providers, ie a voucher generated by one service provider may be redeemed at another service provider.

An example of such a card 200 is shown in Figure 2. The card includes a plurality of identifiers, some of which are generic to the system of the invention and some of which are specific to the user. The most important identifier on the card is the personal identifier associated with the user, shown in Figure 2 as a sequence of numbers 205. In certain embodiments this sequence may also be represented as a bar code 210 or other machine readable interface. A brand logo 225 may also be provided as a graphic on the card so as to enable a user to distinguish the card of the present invention with other similarly dimensioned cards such as credit cards or the like. The card will also typically incorporate a contact number 215, via which the user may communicate with the server using their mobile device. Similarly, if the user wishes to interface with the system of the present invention using a web interface portal or the like, the URL 220 of the portal may also be provided.

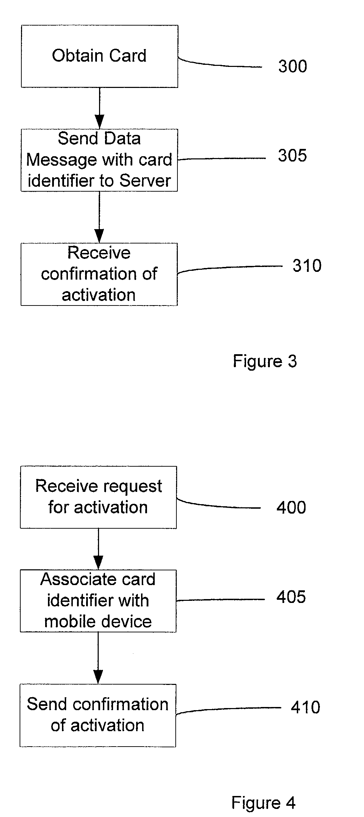

Typically in order for a user to utilise the system of the present invention, it is necessary for the user to first register with the system. Such a registration provides for the population of the validation server with the specific UID and/or DID of that user. Figure 3 shows an example of such a registration process. The user obtains a system card (Step 300) from a retail outlet or other such physical location. Using the contact number 215 provided on the card, the user sends a data message including the personal identifier provided on the card, in the form of an SMS text message or the like, to the server (Step 305). Once the user has been registered they may then receive a confirmation of enrolment and activation from the server, again in the form of a text message (Step 310). Such a message is typically automated.

Figure 4 outlines what the registration process looks like from the server perspective. The server receives over the communication interface, a request for activation from a user (Step 400). The server extracts, from the data communication message, the personal identifier associated with the card and user and stores that identifier in a data store, such as for example data store 2 shown in Figure 1. The server also extracts from the message, a hardware identifier such as the mobile device MSISDN and stores that in a data store, such as data store 1 of Figure 1. Each of the personal identifier and hardware identifier are then associated with one another through the use of a relational data structure or the like (Step 405). Once both identifiers have been stored and associated with one another the user may then be notified of activation of account (Step 410). A subsequent valid voucher is defined by generating a voucher identifier and associating that voucher identifier with one or more of the user identifier or personal identifier.

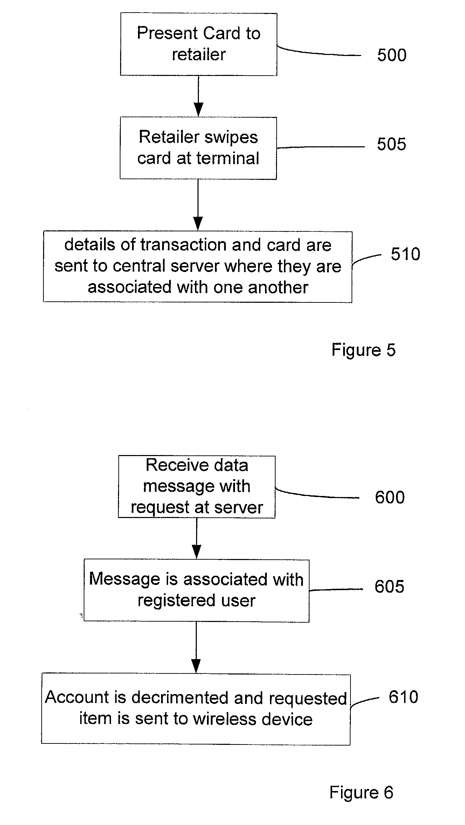

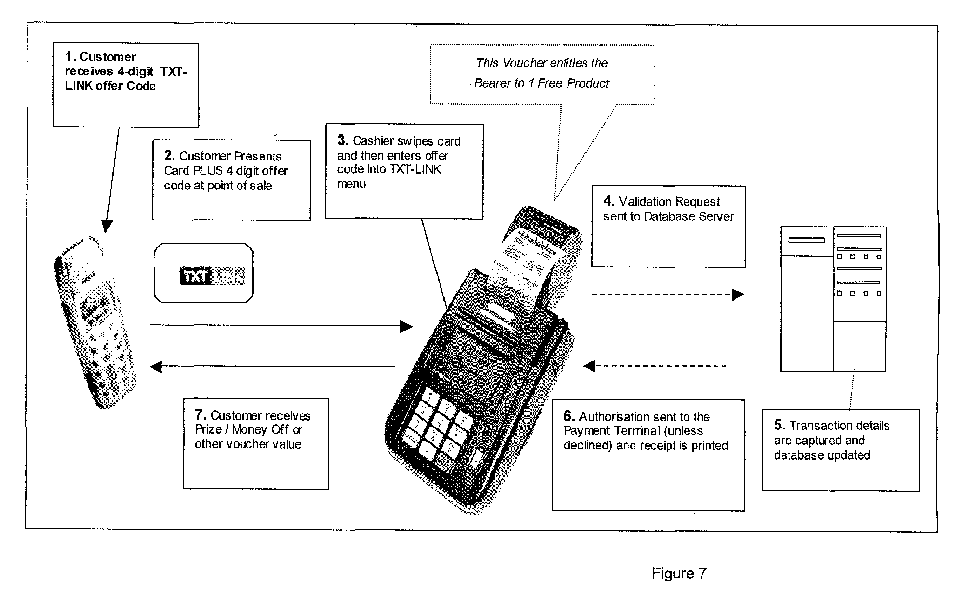

The system of the present invention may be adapted to enable a user to implement a loyalty account system or the like whereby transactions conducted by a user may be used to obtain points/prizes or the like for subsequent redemption. Figure 5 shows an example of an implementation of such a loyalty system whereby the user, on conducting a transaction at a retail outlet, presents their card to the retailer (Step 500). The retailer swipes the card at a point of sale terminal, which is remote from, but in communication with, the server of the present invention (Step 505). Such swiping of loyalty cards will be well known to those familiar with the operation of loyalty cards and ensures that a transaction is associated with a specific user. On completion of the transaction, details of the transactions or the points that have accrued resulting from the transaction, are sent from the remote terminal to a central server specific to the loyalty account, where they may be stored and associated with that specific user (Step 510). The loyalty account server may be co-resident with the validity server or may be remote from but adapted to be in communication with the validity server. The accrual of a certain amount of points or other predetermined factors may then be used to reward a user, in the form of "pushing" items to that user. Such reward or redemption of items is detailed in Figure 7.

Figure 6 shows how using the identifiers established by the methodology of the present invention, it is possible for a user to also "pull" certain items. In the field of mobile commerce it is well known for users to interface with remote servers to obtain items such as games, ring tones for the mobile device and the like. Typically, these are provided by a third party service provider and the cost of the desired product or service is deducted from the account of the user by use of premium interface numbers. For example, if the cost of the service is 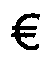 5, then by calling the premium number necessary to effect the download, the call account of the user is decremented by the value of the call. This can be disadvantageous to certain users where they are using pre-paid telephones and the value desired for effecting the call is greater than that currently on their account. Using a system in accordance with the present invention it is possible to provide such a service without decrementing the call value account of the user. As shown in Figure 6, a user wishing to avail of a certain service sends a data communication message to the central server including details of the requested service (Step 600). The message is received at the server and is associated with a registered user (Step 605). Such association typically includes the extraction from the data message of the hard ware identifier (DID) and the association of that identifier with the personal identifier of a registered user. As was detailed in the discussion of Figure 5, a user may maintain a personal account resulting from a series of loyalty transactions. Such an account may then be decremented to the value of the desired service and the requested items returned to the user in the form of a further data communication (Step 610).

Figure 7 shows in schematic form an example of an interaction between a user and the server of the present invention in order to receive a specific offer. On reaching a certain level in their loyalty account or in other circumstances where the user profile matches certain criteria, the system determines that the user warrants a reward. A PIN number, the voucher identifier (VID), specific to that voucher or reward is generated at the server, stored and associated with the personal identifier (UID) or delivery identifier (DID) of a registered user. A copy of the PIN number, typically in the form of a 4 digit offer code, is then sent to the wireless device of the user in the form of an SMS text message (Step 1). On receipt of the text message the user presents their card (Figure 2) and the offer code to a retailer (Step 2). The choice of retailer may be detailed in the original message received by the user from the server, for example the offer may be specific to certain retailers. The retailer then swipes the card at the remote terminal of the retailer- in a manner well known to those skilled in the art- and enters the 4 digit code (Step 3). A validation request is then sent from the remote terminal to the server (Step 4). The server interrogates the validation request and extracts the PIN offer code and the personal identifier and determines whether the provided material matches that previously stored at the server. A further level of security may include an extraction of a hardware identifier from the remote terminal to ascertain whether such a terminal is of the correct type to effect the reward of the type associated with the PIN offer code. If the desired identifiers and PIN numbers match then the server determines that the reward/offer is to be provided and the data base is updated to reflect that the reward has been redeemed (Step 5). Authorisation is then sent to the remote terminal to provide the reward (Step 6). This may effect the printing of a receipt so that the retailer may later correlate the redemption of the goods with their stock. On receiving the authorisation to provide the redemption, then the user receives the detailed prize/offer from the retailer (Step 7).

It will be appreciated that the redemption of such an offer in accordance with the present invention requires a correct presentation by the user of both their personal identifier -either the user identifier or delivery identifier- and a correct VID such as a PIN number for the desired voucher. Only if both identifiers are matched at the central server is the voucher validated. Suitably, the personal identifier will remain a static identifier associated with a specific user for the length of their registration with the system of the present invention whereas the PIN numbers used are dependent on specific vouchers and will therefore vary. The validity of a PIN number may be limited to certain time periods or retail outlets such that if not used in the correct environment of time frame that it a requested transaction will be denied. A single PIN number may be uniquely identified with a specific transaction and a plurality of registered users. For example if a user belongs to a group profile and it is determined that such a specific profile is to be notified of a reward, then it is possible that each member of the group- each having their own unique personal identifier- will be provided with the same PIN. The combination of any one of the personal identifiers associated with the PIN and the PIN will effect an authorised transaction. Therefore, although a matching of two identifiers is required to effect completion of a transaction, both identifiers do not need to be uniquely associated with the same user. It is only necessary that one identifier (the personal identifier) is uniquely associated with a user, and that the second identifier (the PIN) has been associated with the personal identifier, the combination of the two identifiers defining a valid voucher.

It will be appreciated that the present invention provides for a validation system and method adapted to enable a validation of electronic vouchers. A validation server is provided on which is maintained a data correlation between at least one user identifier (UID) specific to an individual user and a voucher identifier (VID) specific to a specific electronic voucher. At least one delivery identifier (DID) specific to a hardware device of the user is also provided. A valid voucher is defined at the validation server by a combination of at least one of the UID and DID with the VID. A copy of the voucher identifier is provided to the user. In order to validate a voucher, the user provides a combination of their user identifier and the voucher identifier to a remote terminal, adapted to be in communication with the validation server. The remote terminal requests validation from the server and if the presented combination match the previously stored combination a match is determined and the voucher is validated. Some examples of how this electronic voucher validation process can be applied to particular business cases are as follows:
- Commercial Brands can use this invention to issue electronic vouchers redeemable via this invention at a wide variety of retail outlets
- Mature, closed-loop loyalty schemes such as a grocery loyalty club can offer their members the ability to convert "points" to electronic vouchers, redeemable for a variety of commodities at non-competing retail outlets such as movie theatres via this invention
- Retailers which have both eCommerce and traditional "bricks and mortar" retail stores can allow their customers to purchase gift vouchers that can be redeemed in-store or on-line but eliminate the risk that they can be redeemed in-store AND on-line
- A registered consumer reads an in-store sign that they can receive a 10% instant discount voucher to their mobile phone if they text the word "DISCOUNT" to an SMS short code number. They do so, and receive a Voucher code (VID) to their mobile phone, which can be redeemed though our invention.
- An mCommerce company can provide the ability for the consumer to buy a voucher using an mPayment application, and deliver a VID via SMS to the consumer's mobile phone

This invention also satisfies the previously mentioned requirements test for vouchers including the fact that if the original voucher is used by the intended recipient in an incorrect manner, ie, after the expiration date or at the wrong retail outlet, this is detected at the point of redemption, and the voucher may not be redeemed.

The words comprises/comprising when used in this specification are to specify the presence of stated features, integers, steps or components but does not preclude the presence or addition of one or more other features, integers , steps, components or groups thereof.

## Claims

1. A validation system adapted to provide for validation of electronic vouchers, the system including:
a validation server adapted to initially associate a voucher identifier (VID) with at least one of a user identifier (UID) or delivery identifier (DID) to define a valid identifier combination thereby defining what is considered a valid voucher,
a first data communication means adapted to enable a subsequent communication of the voucher identifier in the form of a mobile data communication packet from the server to a mobile device associated with the user,
a second data communication means adapted to enable data communication between the server and a remote terminal, such that a voucher defined by an identifier combination presented at the remote terminal may be communicated to the validation server for validation,
and
wherein the validation server includes comparison means adapted to compare the identifier combination received from the remote terminal with the defined valid combination to determined validity of the received voucher such that on determination of a valid identifier combination a data communication is transmitted via the second communication means to the remote terminal confirming that the presented electronic voucher is a valid voucher.

2. The system as claimed in any preceding claim wherein the validation server is further adapted to store at least one remote terminal identifier (PID), each of the at least one remote terminal identifiers being uniquely associated with a specific remote terminal, and wherein a valid voucher is defined by a unique combination of at least one of the user identifier and/or delivery identifier with a voucher identifier and a remote terminal identifier.

3. The system as claimed in any preceding claim wherein the mobile data communication packet is an SMS message, the voucher identifier being provided as characters within the SMS message.

4. The system as claimed in any preceding claim wherein the validation server associates a time stamp with the creation of a valid voucher and further includes a time duration field defining the validity of that voucher and wherein the comparison means is adapted to confirm that the receipt of the identifier combination from the remote terminal is within the defined time duration prior to confirming that the presented voucher is a valid voucher.

5. The system as claimed in any preceding claim wherein a valid voucher is defined by a unique combination of a voucher identifier with at least two of a user identifier, a delivery identifier and/or a remote terminal identifier.

6. The system as claimed in any preceding claim wherein a voucher identifier is created by the prompting of the validation server by an external remote server.

7. The system as claimed in any one of claims 1 to 5 wherein a voucher identifier is created on receipt of a request from a user over the first data communication means.

8. The system as claimed in any preceding claim wherein the remote terminal includes means adapted to enable a user to directly provide their VID to the validation server.

9. A method of validating an electronic voucher, the method comprising the steps of:
defining at a validation server a valid voucher by associating an electronic voucher identifier with at least one of a user identifier associated with a specific user and a delivery identifier specific to a hardware device associated with the user to define a valid combination,
forwarding a copy of the electronic voucher identifier from the validation server to the user in a mobile data packet communication,
receiving a request for validation of a voucher at the validation server from a remote terminal, the request including a combination of an electronic voucher and at least one of a user identifier associated with a specific user and a delivery identifier specific to a hardware device associated with the user,
comparing the received combination with the defined combination and
confirming that the voucher is a valid voucher if the received combination matches the defined combination.

10. The method as claimed in claim 9 wherein the valid combination is valid for a predetermined time period.

11. The method as claimed in any one of claims 9 or 10 wherein a defined valid combination also includes an identifier specific to a remote terminal.
